Europäisches Patentamt

European Patent Office

Office européen des brevets

(11) Veröffentlichungsnummer: **0 176 017 B1**

(12) **EUROPÄISCHE PATENTSCHRIFT**

(45) Veröffentlichungstag der Patentschrift: **05.02.92**

(51) Int. Cl.5: **C08L 67/02**, C08K 3/00, C08K 5/00, C08J 5/18

(21) Anmeldenummer: **85111652.5**

(22) Anmeldetag: **14.09.85**

(54) **Verwendung von Nucleierungsmittel zur Verbesserung der Dimensionsstabilität, Abriebfestigkeit und Streckbarkeit von Polyesterfolien.**

(30) Priorität: **22.09.84 DE 3434838**

(43) Veröffentlichungstag der Anmeldung:
**02.04.86 Patentblatt 86/14**

(45) Bekanntmachung des Hinweises auf die Patenterteilung:
**05.02.92 Patentblatt 92/06**

(84) Benannte Vertragsstaaten:
**DE FR GB LU NL**

(56) Entgegenhaltungen:
**EP-A- 0 112 167**
**CH-A- 549 614**
**DE-A- 3 103 142**

**PATENTS ABSTRACTS OF JAPAN, Band 6, Nr. 15 (C-89)[893], 28. Januar 1982; & JP-A-56 139 551 (TEIJIN K.K.) 31-10-1981**

**PATENTS ABSTRACTS OF JAPAN, Band 6, Nr.15 (C-89)[893], 28. Januar 1982; & JP-A-56 139 550 (MITSUBISHI KASEI KOGYO K.K.) 31-10-1981**

(73) Patentinhaber: **HOECHST AKTIENGESELL-SCHAFT**
**Postfach 80 03 20**
**W-6230 Frankfurt am Main 80(DE)**

(72) Erfinder: **Gawrisch, Wolfgang, Dr.**
**Am Dalberger 10**
**W-6501 Gau-Bischofsheim(DE)**
Erfinder: **Schäfer, Werner, Dr.**
**Rosenstrasse 10**
**W-6238 Hofheim-Diedenbergen(DE)**
Erfinder: **Dallman, Hermann, Dr.**
**Erbsenacker 29**
**W-6200 Wiesbaden(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung bezieht sich auf die Verwendung von Nucleierungsmitteln für eine mono- oder multiaxial streckorientierte, hitzefixierte Folie aus thermoplastischem Polyester mit verbesserter Dimensionsstabilität, erhöhter Abriebfestigkeit und verbesserter Streckbarkeit.

Gegenstand ständiger Bemühungen ist es, die Dimensionsschwankungen, denen Polyesterfolien unter dem Einfluß thermischer Einwirkungen unterliegen, besser beherrschbar zu machen. Die EP-B-0 012 405 beschreibt ein Verfahren, bei dem der Schrumpf von Folien über eine ganz genau definierte Rahmengeometrie während des Verfahrensschrittes der Hitzefixierung abgebaut wird. Ein Nachteil dieses Verfahrens ist darin zu sehen, daß dann, wenn bei vorgegebener Rahmengeometrie eine Erhöhung der Produktionsgeschwindigkeit vorgesehen ist, aufgrund der resultierenden verkürzten Fixierzeiten der Schrumpf der Folie wieder ansteigt. Dieser Nachteil konnte bisher nur durch zwei alternativ oder gleichzeitig anwendbare Maßnahmen beseitigt werden, nämlich zum einen durch eine Erhöhung der Fixiertemperatur und zum anderen durch eine Verlängerung des Fixierrahmens. Hinsichtlich der Fixiertemperatur ist bei bestehenden Anlagen ein optimaler Wirkungsgrad erreicht. Im Hinblick auf eine Verlängerung des Fixierrahmens wird aufgrund der dafür aufzuwendenden erheblichen Investitionskosten schnell die Schwelle der Wirtschaftlichkeit der damit hergestellten Produkte überschritten.

Der vorliegenden Erfindung liegt somit die Aufgabe zugrunde, unter wirtschaftlichen Gesichtspunkten eine Polyesterfolie mit guter Dimensionsstabilität, erhöhter Abriebfestigkeit und verbesserter Streckbarkeit bereitzustellen sowie geeignete Dimensionsstabilitäts-, Abriebfestigkeits- und Streckbarkeits-Verbesserer beider Herstellung der Folie verwenden. Gelöst wird diese Aufgabe durch die Verwendung, die in Patentanspruch 1 angegeben ist und deren bevorzugte Ausgestaltungen sich aus den untergeordneten Ansprüchen 2 bis 7 ergeben.

Als thermoplastische Polyestermaterialien werden im Rahmen der vorliegenden Erfindung insbesondere Mono- oder Polykondensate aus Terephthalsäure oder Isophthalsäure mit Glykolen mit 2 bis 10 Kohlenstoffatomen, besonders bevorzugt Polyethylenterephthalat oder Polybutylenterephthalat, eingesetzt.

Als Nukleierungsmittel werden Alkali- oder Erdalkalisalze von Esterwachsen oder teilverseiften Esterwachsen, z.B. der Montansäure, ionische Copolymerisate aus Ethylen und Alkalisalzen der Methacrylsäure, Alkalisalze von Phenolsulfonsäuren oder anorganische Nukleierungsmittel eingesetzt.

Als anorganische Nukleierungsmittel eignen sich vor allem Erdalkalicarbonate, besonders Calcium-Magnesiumcarbonat, und Oxide wie Titandioxid und Aluminiumoxid, außerdem Talkum und Aluminiumsilikate.

Die Montansäure ist ein Säuregemisch, das hauptsächlich aus aliphatischen Monocarbonsäuren einer Kettenlänge zwischen 26 und 32 Kohlenstoffatomen besteht. Geeignete Montanwachssalze enthalten als Kationen vor allem die Metalle der 1. bis 3. Hauptgruppe des Periodensystems, vorzugsweise Li, Na, K, Be, Mg, Ca und Al. Bevorzugt wird Na-Montanat verwendet. Als teilneutralisierte Montanwachssalze werden durch Reaktion der Montansäure mit 0,1 bis 1 Äquivalent Alkalihydroxid oder -oxid, vorzugsweise mit 0,25 bis 0,9 Äquivalent Natronlauge hergestellte Salze, verwendet.

Geeignete Montanwachsestersalze erhält man durch teilweise Veresterung der Montansäuren mit bis zu 0,90 Äquivalent, vorzugsweise 0,5 bis 0,8 Äquivalent, zweiwertiger Alkohole mit 2 bis 4 Kohlenstoffen in der Alkylen-Gruppe und anschließende Neutralisierung mit Oxiden oder Hydroxiden der genannten Metalle. Besonders geeignete Diole sind z.B. Äthylenglykol, 1,2- bzw. 1,3-Propandiol und 1,3- bzw. 1,4-Butandiol.

Nukleierungsmittel auf Basis von Montansäure und deren Einsatz in Folien sind z.B. beschrieben in der japanischen Offenlegungsschrift 81/139,551 (siehe auch Chem.Abstr. 96: 53440g). In dieser Druckschrift sind die Transparenz und der Reibungskoeffizient von mit den genannten Zusätzen hergestellten Folien beschrieben. Es hat sich aber überraschend gezeigt, daß sich aus Polyestermaterialien mit Zusatz an Nukleierungsmitteln Folien herstellen lassen, die eine besonders hohe Dimensionsstabilität aufweisen.

Die Folien der vorliegenden Erfindung können neben den bereits genannten Nukleierungsmitteln ferner noch in den üblichen Mengen Mittel zur Verbesserung der Schlupf- und Gleitfähigkeitseigenschaften enthalten sowie andere übliche Zusätze wie Antioxidantien, Thermostabilisatoren, Antistatika und Färbemittel.

Die Folien können auch Teil oder Teile von mehrschichtigen Schichtkörpern bilden, insbesondere können verschieden nukleierte oder verschieden nukleierte und gar nicht nukleierte Polyestermaterialien durch Koextrusion oder Aufkaschierung zu Mehrschichtfolien verbunden sein. Durch die Schichtenbildung können insbesondere die Vorteile der verschiedenen Nukleierungsmittel gezielt auf den jeweiligen Verwendungszweck der Folie eingestellt werden.

Die Zusätze an Nukleierungsmittel, die bevorzugt im Bereich von 0,2 bis 5,0 Gew.-%, bezogen auf das Gewicht des Polyesters, liegen, können dem Polyestermaterial während oder nach der Herstellung zugesetzt werden. In der Praxis hat es sich aber im Hinblick auf optimale Dimensionsstabilität und Abriebfestigkeit als besonders vorteilhaft erwiesen, das Nukleierungsmittel entweder in Form eines Masterbatches zuzugeben oder aber dasselbe auf das getrocknete Polyestergranulat durch Zumischen aufzubringen.

Die erfindungsgemäße Verwendung der vorstehend genannten Nukleierungsmittel läßt sich durch ein Verfahren zur Herstellung von insbesondere biaxial streckorientierten Folien mit verbesserter Dimensionsstabilität, Abriebfestigkeit und Streckbarkeit, realisieren bei dem das thermoplastische Polyestermaterial mit dem Nukleierungsmittel gemischt, dann aufgeschmolzen, durch eine Breitschlitzdüse zu einer Vorfolie extrudiert und auf einer Kühlwalze abgeschreckt wird, danach entweder simultan oder stufenweise multiaxial in einem Mehrstufenprozeß gestreckt und daran anschließend hitzefixiert und aufgewickelt wird. Die Merkmale des Verfahrens sind darin zu sehen, daß dem thermoplastischen Polyestermaterial Nukleierungsmittel in einer Menge von 0,01 bis 10,0 Gew.-%, bezogen auf das Gewicht des Polyestermaterials, zugemischt werden, daß die aus der Düse austretende Schmelze von einer Temperatur im Bereich von 260°C bis 320°C in einer Zeit von höchstens 2,5 sec auf eine Temperatur im Bereich von 50°C bis 80°C zu der Vorfolie abgekühlt wird und daß die Hitzefixierung bei einer Temperatur zwischen 170°C und 250°C bei einer Zeitdauer zwischen 1 und 20 sec vorgenommen wird.

Bei der Durchführung des im vorstehenden beschriebenen Verfahrens ist es besonders überraschend, daß beim Abkühlen der Polyesterschmelze auf der Kühlwalze durch das Nukleierungsmittel keine verstärkte Kristallitbildung beobachtet wird. Die Dichte der Vorfolie liegt unterhalb von 1,34 g/cm$^3$. Auch bei der Streckung der Folie werden keine negativen Einflüsse durch das Nukleierungsmittel und die damit vorliegenden Keime für die Bildung von Kristalliten beobachtet. Diese Keime kommen erst bei dem Verfahrensschritt der Hitzefixierung zum tragen, durch den aufgrund der vermehrten Bildung von Kristalliten in der biaxial oder multiaxial gestreckten, Nukleierungsmittel enthaltenden Polyesterfolie das Schrumpfverhalten der Folie in besonders überraschendem Ausmaß abgebaut wird.

Das Verfahren wird unter Beachtung und Beibehaltung der folgenden Parameter durchgeführt. Nachdem nach dem Abschrecken der Schmelze eine amorphe Vorfolie mit einer Dichte unter 1,34 g/cm$^3$ erhalten wird, wird diese Vorfolie bei einer Temperatur $T_1$, die zwischen Tg (Glasübergangstemperatur) +10°C und Tg +70°C liegt, um das 1,05- bis 2,0fache, dann ohne Zwischenkühlung bei einer Temperatur $T_2$, die zwischen Tg +10°C und Tg +40°C liegt, um das 2,0- bis 3,0fache längsgestreckt, beziehungsweise die Vorfolie wird einfach bei einer Temperatur T, die zwischen Tg und Tg -70°C liegt, um das 1,5- bis 5fache längsgestreckt. Danach wird die so erhaltene uniaxial streckorientierte Folie bei einer Temperatur zwischen Tg und $T_2$ um das 3,0- bis 4,5fache senkrecht zu der ersten Streckrichtung quergestreckt. Die uniaxial streckorientierte Folie weist bevorzugt eine Dichte zwischen 1,35 und 1,36 g/cm$^3$ und einen mittleren Elastizitätsmodul $E_m$ zwischen 3.500 und 4.500 N/mm$^2$ auf. Die biaxial streckorientierte Folie weist bevorzugt eine Dichte zwischen 1,36 und 1,38 g/cm$^3$ und einen $E_m$ zwischen 4.500 und 5.500 N/mm$^2$ auf. Die Folie zeigt bevorzugt nach dem Verfahrensschritt der Querstreckung insbesondere bei zweifacher Längsstreckung eine Doppelbrechung zwischen $- 20 \cdot 10^{-3}$ und $- 45 \cdot 10^{-3}$ sowie eine Differenz der Elastizitätsmodule in Längsrichtung (MD) und in Querrichtung (TD) $E_{TD} - E_{MD}$ im Bereich zwischen 2.000 und 2.500 N/mm$^2$.

Für die Herstellung von hochfesten Folien schließt sich dem Verfahrensschritt der Querstreckung dann bevorzugt noch eine Nachlängsstreckung an, die bei 150°C durchgeführt wird und bei der die Folie bis zum 2,5fachen gestreckt wird. Die an der nachlängsgestreckten Folie gemessene Doppelbrechung liegt bevorzugt im Bereich zwischen $+ 30 \cdot 10^{-3}$ und $+ 50 \cdot 10^{-3}$. Die Dichte der nachlängsgestreckten Folie liegt bevorzugt bei 1,38 bis 1,39 g/cm$^3$, die Dichte der nachlängsgestreckten und hitzefixierten Folie beträgt mindestens 1,40 g/cm$^3$.

Bei der Herstellung hochfester und dimensionsstabiler Polyesterfolien ist es von besonderer Bedeutung, daß innerhalb der einzelnen Streckstufen ein bestimmtes Verhältnis zwischen Dichte, Orientierung und Kristallgröße bzw. -anzahl eingestellt wird. Dieses Verhältnis läßt sich durch die erfindungsgemäß der Folie zugefügten Nukleierungsmittel auf einfache Weise regulieren.

Überraschenderweise wird auch beobachtet, daß das mechanische Eigenschaftsbild der Folie nicht verschlechtert wird.

Neben der verbesserten Dimensionsstabilität, Abriebfestigkeit und Streckbarkeit der Folie sind als weitere Vorteile der vorliegenden Erfindung anzusehen, daß bei der Trocknung des Polyestergranulats bei höheren Temperaturen durch den Zusatz der Nukleierungsmittel eine geringere Neigung zu Verklebungen der Polyesterteilchen festgestellt wird. Dadurch kann der Durchsatz in diesem Arbeitsgang erhöht werden. Somit lassen sich mit der vorliegenden Erfindung höhere Produktionsgeschwindigkeiten bei gleicher Folienqualität und damit eine Verbesserung der Wirtschaftlichkeit erreichen.

Die erfindungsgemäßen Folien lassen sich wegen ihrer überraschend hohen Dimensionsstabilität und Abriebfestigkeit besonders für Anwendungszwecke einsetzen, bei denen die genannten Eigenschaften in besonders hohem Maß wünschenswert sind. Typischerweise werden die Folien als Trägerfolien für fotographische, optische oder magnetische Informationsträger oder als elektrische Isolationsfolien in Kondensatoren oder Elektromotoren eingesetzt.

Beispiel 1

Einem Polyethylenterephthalatrohstoff, hergestellt mit einem Umesterungskatalysator aus Manganacetatdihydrat, wurden 0,4 Gew.-%, bezogen auf das Gewicht des Polyethylenterephthalats, an Natriummontanat zugemischt. Das Gemisch wurde aufgeschmolzen, in einer Breitschlitzdüse zu einer Folie geformt und auf einer hochglanzpolierten Abkühlwalze zu einer amorphen Vorfolie abgeschreckt. Die Vorfolie wurde anschließend biaxial streckorientiert, wobei ein Flächenstreckverhältnis von 12,3 eingehalten wurde. Danach wurde die biaxial gestreckte Folie in einem Umlufttrockenschrank bei 200°C 5 sec lang hitzefixiert.

Vergleichsbeispiel 1

Wie in Beispiel 1 wurde eine biaxial streckorientierte Polyethylenterephthalatfolie hergestellt, jedoch ohne den Zusatz an Natriummontanat.

ERGEBNISSE:

## Dimensionsstabilität:

| Temperatur °C | % Schrumpf nach 15 min bei | | | |
|---|---|---|---|---|
| | Vergleichsbeispiel | | Beispiel 1 | |
| | längs | quer | längs | quer |
| 100 | 0,7 | 0,4 | 0,4 | 0,3 |
| 120 | 1,0 | 1,0 | 0,8 | 0,6 |
| 140 | 2,3 | 1,8 | 1,4 | 1,3 |
| 170 | 10,5 | 7,2 | 2,4 | 2,4 |
| 200 | 13,1 | 10,9 | 8,3 | 8,1 |

## Mechanische Daten:

| | | Streckspannung bei 5% Dehnung $\sigma 5$ $N/mm^2$ | E-Modul $N/mm^2$ |
|---|---|---|---|
| Vergleichs-beispiel | längs | 94 | 4106 |
| | quer | 109 | 5339 |
| Beispiel 1 | längs | 92 | 4145 |
| | quer | 99 | 4858 |

Beispiel 2

Wie in Beispiel 1 wurde eine biaxial streckorientierte Polyethylenterephthalatfolie enthaltend 0,4 Gew.-%

Natriummontanat hergestellt, jedoch wurden dem Polyestermaterial vor der Extrusion zusätzlich noch 0,2 Gew.-% Aluminiumsilikat (Kaolin) mit einer mittleren Teilchengröße von 0,3 μm zugegeben.

Vergleichsbeispiel 2

Vergleichsbeispiel 1 wurde wiederholt, jedoch mit 0,2 Gew.-% Kaolin wie in Beispiel 2, aber ebenfalls ohne Zusatz an Nukleierungsmittel.

ERGEBNISSE:

## Dimensionsstabilität:

| Temperatur | % Schrumpf nach 15 min bei | | | |
|---|---|---|---|---|
| | Vergleichsbeispiel | | Beispiel 2 | |
| °C | längs | quer | längs | quer |
| 100 | 0,8 | 0,6 | 0,3 | 0,3 |
| 120 | 1,2 | 0,9 | 0,6 | 0,5 |
| 140 | 2,0 | 1,6 | 1,2 | 1,0 |
| 170 | 10,0 | 8,0 | 2,0 | 2,0 |
| 200 | 12,6 | 12,8 | 7,6 | 7,2 |

## Mechanische Daten:

| | | Streckspannung bei 5% Dehnung $\delta_5$ $N/mm^2$ | E-Modul $N/mm^2$ |
|---|---|---|---|
| Vergleichs- | längs | 113 | 4808 |
| beispiel | quer | 101 | 5217 |
| Beispiel 2 | längs | 111 | 4766 |
| | quer | 99 | 5105 |

Das Abriebverhalten der nach den Beispielen und den Vergleichsbeispielen hergestellten Folien wurde an einem Meßgerät getestet, bei dem ein 12,5 mm breites Folienband mit einer konstanten Bahnspannung (1 N) über eine Reibwalze (feststehende Umlenkrolle aus einer Magnetbandkassette) gezogen, anschließend über zwei als Meßrollen dienende Gummirollen geführt und dann aufgerollt wurde. Die Beladung der Gummirollen wurde nach einer Meßskala von 1, entspricht sehr wenig Abrieb, bis 6, entspricht sehr viel Abrieb, beurteilt. Die Meßergebnisse sind in der nachfolgenden Tabelle zusammengestellt:

5

| | Abrieb |
|---|---|
| **Beispiel 1** | 1 |
| **Vergleichsbeispiel 1** | 5 |
| **Beispiel 2** | 1 |
| **Vergleichsbeispiel 2** | 5 |

**Patentansprüche**

1. Verwendung von Nukleierungsmitteln, ausgewählt aus der Gruppe der Alkali- oder Erdalkalisalze von Esterwachsen oder teilverseiften Esterwachsen, der ionischen Copolymerisate aus Ethylen und Alkalisalzen der Methacrylsäure, der Alkalisalze von Phenolsulfonsäuren, der Erdalkalicarbonate, der Oxide von Titan und Aluminium, der Aluminiumsilikate sowie Talkum zur Verbesserung der Dimensionsstabilität, der Abriebfestigkeit und der Streckbarkeit von hitzefixierten, mono- oder multiaxial streckorientierten Folien aus thermoplastischem Polyester, wobei die Nukleierungsmittel in einer Menge von 0,01 bis 10,0 Gew.-%, bezogen auf das Gewicht des die Folie bildenden Polyesters, eingesetzt werden.

2. Verwendung nach Anspruch 1, dadurch gekennzeichnet, daß als thermoplastischer Polyester Homo- oder Copolykondensat aus Terephthalsäure oder Isophthalsäure mit Glykolen mit 2 bis 10 Kohlenstoffatomen eingesetzt wird.

3. Verwendung nach Anspruch 2, dadurch gekennzeichnet, daß der Polyester Polyethylenterephthalat und/oder Polybutylenterephthalat ist.

4. Verwendung nach einem der Ansprüche 1 bis 3, dadurch gekennzeichnet, daß als Nukleierungsmittel Natriummontanat und/oder Copolymerisate aus Ethylen und Alkalisalzen der Methacrylsäure eingesetzt werden.

5. Verwendung nach einem der Ansprüche 1 bis 4, dadurch gekennzeichnet, daß als Nukleierungsmittel Natriummethacrylat, eingesetzt wird.

6. Verwendung nach einem der Ansprüche 1 bis 5, dadurch gekennzeichnet, daß das Nukleierungsmittel in einer Menge zwischen 0,2 und 5,0 Gew.-%, bezogen auf das Gewicht des Polyesters, eingesetzt wird.

7. Verwendung nach einem der Ansprüche 1 bis 6, dadurch gekennzeichnet, daß das Nukleierungsmittel in einer oder in mehreren Schichten einer Mehrschichtfolie eingesetzt wird.

**Claims**

1. Use of nucleating agents selected from the group consisting of alkali metal salts or alkaline earth metal salts of ester waxes or partially hydrolized ester waxes, ionic copolymers of ethylene and alkali metal salts of methacrylic acid, alkali metal salts of phenol-sulfonic acids, alkaline earth metal carbonates, oxides of titanium and aluminum, aluminum silicates and talcum to improve the dimensional stability, the abrasion resistance and the stretchability of heat-set, monoaxially or multi-axially stretch-oriented films of thermoplastic polyester, the nucleating agents being employed in an amount of 0.01 to 10.0 % by weight, based on the weight of the film-forming polyester.

2. The use as claimed in claim 1, wherein the thermoplastic polyester employed us a homopolycondensate or copolycondensate of terephthalic acid or isophthalic acid with glycols having 2 to 10 carbon atoms.

3. The use as claimed in claim 2, wherein the polyester is polyethylene terephthalate and/or polybutylene terephthalate.

6

4. The use as claimed in any of claims 1 to 3, wherein the nucleating agents employed are sodium montanate and/or copolymers of ethylene and alkali metal salts of methacrylic acid.

5. The use as claimed in any of claims 1 to 4, wherein the nucleating agent employed is sodium methacrylate.

6. The use as claimed in any of claims 1 to 5, wherein the nucleating agent is added in an amount of between 0.2 and 5.0 % by weight, based on the weight of the polyester.

7. The use as claimed in any of claims 1 to 6, wherein the nucleating agent is used in one or several layers of a multi-layer film.

**Revendications**

1. Utilisation d'agents de nucléation, choisis parmi les sels alcalins ou alcalino-terreux de cires ester ou de cires ester partiellement saponifiées, les copolymères ioniques d'éthylène et de sels alcalins de l'acide méthacrylique, les sels alcalins d'acides phénolsulfoniques, les carbonates alcalino-terreux, les oxydes de titane et d'aluminium, les silicates d'aluminium ainsi que le talc, pour l'amélioration de la stabilité dimensionnelle, de la résistance à l'abrasion et de l'aptitude à l'étirage de pellicules à base de polyester thermoplastique, orientées mono- ou multiaxialement par étirage, thermofixées, les agents de nucléation étant utilisés en une quantité de 0,01 à 10,0 % en poids, par rapport au poids du polyester constituant la pellicule.

2. Utilisation selon la revendication 1, caractérisée en ce que, en tant que polyester thermoplastique, on utilise un produit d'homo- ou copolycondensation d'acide téréphtalique ou d'acide isophtalique avec des glycols ayant de 2 à 10 atomes de carbone.

3. Utilisation selon la revendication 2, caractérisée en ce que le polyester est le poly(téréphtalate d'éthylène) et/ou le poly(téréphtalate de butylène).

4. Utilisation selon l'une des revendications 1 à 3, caractérisée en ce que, en tant qu'agent de nucléation, on utilise le montanate de sodium et/ou des copolymères d'éthylène et de sels alcalins de l'acide méthacrylique.

5. Utilisation selon l'une des revendications 1 à 4, caractérisée en ce que l'on utilise le méthacrylate de sodium en tant qu'agent de nucléation.

6. Utilisation selon l'une des revendications 1 à 5, caractérisée en ce que l'on utilise l'agent de nucléation en une quantité comprise entre 0,2 et 5,0 % en poids, par rapport au poids du polyester.

7. utilisation selon l'une des revendications 1 à 6, caractérisée en ce que l'agent de nucléation est utilisé dans une ou plusieurs couches d'une pellicule multicouche.